(19) Europäisches Patentamt
European Patent Office
Office européen des brevets

(11) **EP 4 653 270 A1**

(12) **EUROPEAN PATENT APPLICATION**
published in accordance with Art. 153(4) EPC

(43) Date of publication:
**26.11.2025 Bulletin 2025/48**

(21) Application number: **23921950.4**

(22) Date of filing: **17.02.2023**

(51) International Patent Classification (IPC):
***B60T 8/24*** *(2006.01)*      ***B60T 8/17*** *(2006.01)*
***B60T 7/12*** *(2006.01)*      ***B60W 40/076*** *(2012.01)*

(52) Cooperative Patent Classification (CPC):
**B60T 7/12; B60T 8/17; B60T 8/24; B60W 40/076**

(86) International application number:
**PCT/CN2023/076733**

(87) International publication number:
**WO 2024/168800 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518110 (CN)**

(72) Inventors:
• **LV, Shangwei
  Shenzhen, Guangdong 518129 (CN)**
• **MA, Wentao
  Shenzhen, Guangdong 518129 (CN)**
• **ZHANG, Haoran
  Shenzhen, Guangdong 518129 (CN)**
• **ZHOU, Yongyou
  Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **CONTROL METHOD AND BRAKING SYSTEM**

(57)     A control method and a brake system are provided. The method includes: when a vehicle goes downhill from a stationary state, obtaining a stroke of a brake pedal in the vehicle, and when the stroke of the brake pedal is greater than a first threshold, controlling the vehicle to brake with a first braking force, for a vehicle speed of the vehicle to be within a target vehicle speed range. In this way, when the vehicle starts to go downhill from the stationary state, a driver may control the vehicle speed of the vehicle by depressing the brake pedal, to effectively avoid a forward surge of the vehicle, and implement stable starting of the vehicle, so as to effectively improve safety of the vehicle.

```
                                                                    S301
┌─────────────────────────────────────────────────────────────┐
│ When a vehicle goes downhill from a stationary state, obtain a │
│           stroke of a brake pedal in the vehicle              │
└─────────────────────────────────────────────────────────────┘
                              │
                              ▼
                                                                    S302
┌─────────────────────────────────────────────────────────────┐
│ When the stroke of the brake pedal is greater than a first threshold, │
│ control the vehicle to brake with a first braking force, for a vehicle │
│   speed of the vehicle to be within a target vehicle speed range      │
└─────────────────────────────────────────────────────────────┘
```

FIG. 3

EP 4 653 270 A1

## Description

TECHNICAL FIELD

This application relates to the field of vehicle technologies, and provides a control method and a brake system.

BACKGROUND

When a vehicle travels on a hill, because a road condition of the hill is complex, a driver needs to control a vehicle speed of the vehicle. However, when the vehicle starts to go downhill from a stationary state, if the driver releases a brake pedal, the vehicle surges forward immediately (that is, a vehicle speed at an initial stage of the vehicle going downhill increases). Consequently, the vehicle slips, and safety of the vehicle and the driver is affected.

In some technical solutions, in an uphill scenario of the vehicle, the driver controls the brake pedal and a throttle, to implement stable starting of the vehicle. In these solutions, the vehicle can be prevented from jerking in the uphill scenario, but the vehicle still cannot start stably in a scenario in which the vehicle starts to go downhill from the stationary state.

Therefore, how to implement stable starting of the vehicle in the scenario in which the vehicle starts to go downhill from the stationary state is an urgent technical problem that needs to be resolved in this field.

SUMMARY

This application provides a control method and a brake system, to implement stable starting of a vehicle in a scenario in which the vehicle starts to go downhill from a stationary state, so as to improve safety of using the vehicle by a driver.

According to a first aspect, an embodiment of this application provides a control method. The method may be applied to a control apparatus, and the method includes: when a vehicle goes downhill from a stationary state, obtaining a stroke of a brake pedal in the vehicle, where the stroke of the brake pedal represents a degree of depressing the brake pedal by a driver; and when the stroke of the brake pedal is greater than a first threshold, controlling the vehicle to brake with a first braking force, for a vehicle speed to be within a target vehicle speed range.

In this embodiment of this application, the stroke of the brake pedal may be collected through a pedal stroke sensor. "The stroke of the brake pedal is greater than a first threshold" may be understood as that the driver depresses the brake pedal. A value of the first threshold may be, for example, 15 mm to 20 mm. This is not specifically limited in embodiments of this application. The "target vehicle speed range" may be understood as a vehicle speed range of the vehicle starting stably. For example, the target vehicle speed range may be a vehicle speed range less than 20 km/h.

In the method, when the vehicle starts to go downhill from the stationary state, if the stroke of the brake pedal in the vehicle is greater than the first threshold, the vehicle is controlled to brake with the first braking force, for the vehicle speed of the vehicle to be within the target vehicle speed range. In this way, when the vehicle starts to go downhill from the stationary state, the driver may control the vehicle speed of the vehicle by depressing the brake pedal, to effectively avoid a forward surge of the vehicle, and implement stable starting of the vehicle, so as to effectively improve safety of the vehicle.

In a possible design, the first braking force may be determined based on a second braking force of the vehicle being stationary and a slope of a hill on which the vehicle is currently located. In this design, a braking force of the vehicle is dynamically adjusted based on the slope of the hill on which the vehicle is currently located, so that vehicle speed control of the vehicle is more stable, and traveling safety of the vehicle is further improved. It should be understood that the first braking force is less than or equal to the second braking force, that is, an initial value of the first braking force is a value of the second braking force, and the second braking force gradually decreases in a process of the vehicle going downhill. Optionally, a larger slope of the hill on which the vehicle is currently located indicates a slower decrease of the first braking force. In this way, at a position with a large slope, a vehicle speed of the vehicle is stable, so that the vehicle can be effectively prevented from slipping, and traveling safety of the vehicle is further improved.

In a possible design, the method further includes: when the stroke of the brake pedal is zero, controlling the vehicle to brake with the second braking force, for the vehicle to remain stationary. "The stroke of the brake pedal is zero" may be understood as that the driver releases the brake pedal. In this design, when the vehicle starts to go downhill from the stationary state, the driver releases the brake pedal, to control the vehicle to brake with the second braking force, for the vehicle to remain stationary. This effectively prevents the vehicle from slipping, and effectively improves traveling safety of the vehicle.

In a possible design, before the controlling the vehicle to brake with a first braking force, the method further includes: receiving a first instruction, where the first instruction indicates to enable a hill descent control function of the vehicle, and the hill descent control function is used to adjust a braking force of the vehicle in a downhill scenario of the vehicle; and enabling the hill descent control function in response to the first instruction. It may be understood that the "first instruction" is used to trigger the hill descent control function of the vehicle.

In a possible design, the first instruction is a human-machine interaction instruction, or the first instruction is an instruction from an autonomous driving system or an assisted driving system. The human-machine interaction instruction may be any one of a virtual button instruction, a physical button instruction, a voice instruction, or a text instruction. In this way, a user may flexibly trigger the hill descent control function of the vehicle in different manners. "The first instruction is an instruction from an intelligent driving system or an assisted driving system" may be understood as that the intelligent driving system or the assisted driving system may trigger the hill descent control function of the vehicle, and the user does not need to perform any trigger operation. This effectively improves driving experience of the user.

In a possible design, the method further includes: when a first condition is met, adjusting the first braking force to zero. The first condition includes at least one of the following: the tail of the vehicle deviates from a current traveling direction of the vehicle, a throttle opening degree of the vehicle is greater than a second threshold, or a caliper in an electrical park brake EPB system of the vehicle is clamped.

In this embodiment of this application, the "first condition" may be understood as a suppression condition of the hill descent control function. "A tail of the vehicle deviates from a current traveling direction of the vehicle" means that the vehicle is in a side-slide state. "A throttle opening degree of the vehicle is greater than a second threshold" means that it is detected that the driver depresses the accelerator pedal. "A caliper in an electrical park brake (EPB) system of the vehicle is clamped" means that the vehicle is in the stationary state.

In this design, when the suppression condition of the hill descent control function is met, the braking force of the vehicle is adjusted to zero, to control the vehicle to travel normally. This effectively improves traveling safety of the vehicle.

In a possible design, the method further includes: obtaining a vehicle head orientation and gear information of the vehicle, and determining, based on the vehicle head orientation and the gear information of the vehicle, whether the vehicle is in a downhill state. For example, when the head of the vehicle is upward and a current gear is an R gear, it is determined that the vehicle is in the downhill state; or when the head of the vehicle is downward and a current gear is a D gear, it is determined that the vehicle is in the downhill state. In this design, whether the vehicle is in the downhill state is determined based on the vehicle head orientation and the gear information of the vehicle. This effectively improves precision of determining the downhill state of the vehicle. Therefore, when the vehicle goes downhill from the stationary state, the vehicle speed of the vehicle can be correspondingly controlled in time, to further improve safety of the vehicle going downhill.

According to a second aspect, an embodiment of this application further provides a brake system, including a controller, a brake pedal, a pedal stroke sensor, and a brake actuator. The brake pedal is connected to the pedal stroke sensor, and the control unit is connected to both the pedal stroke sensor and the brake actuator. The pedal stroke sensor is configured to collect a stroke of the brake pedal when the vehicle goes downhill from a stationary state, where the stroke of the brake pedal indicates a degree of depressing the brake pedal by a driver. The control unit is configured to: when the stroke of the brake pedal is greater than a first threshold, control the brake actuator to complete a braking operation of the vehicle with a first braking force, for a vehicle speed of the vehicle to be within a target vehicle speed range.

In the second aspect, the controller in the brake system is used to flexibly adjust a braking force of the vehicle and control the vehicle speed when the vehicle goes downhill from the stationary state, so that the vehicle can start stably. This effectively improves traveling safety of the vehicle in a downhill scenario.

According to a third aspect, an embodiment of this application further provides another brake system, including a controller, a brake pedal, a pedal stroke sensor, and a brake actuator. The brake pedal is connected to the pedal stroke sensor, and the control unit is connected to both the pedal stroke sensor and the brake actuator. The pedal stroke sensor is configured to: when the vehicle goes downhill from a stationary state, collect a stroke of the brake pedal, and send the stroke of the brake pedal to the vehicle controller, where the stroke of the brake pedal indicates a degree of depressing the brake pedal by a driver. The control unit is configured to: when the stroke of the brake pedal is greater than a first threshold, receive a braking instruction from the vehicle controller, where the braking instruction is used to control the brake actuator to complete a braking operation of the vehicle with a first braking force, for a vehicle speed of the vehicle to be within a target vehicle speed range.

In the third aspect, when the vehicle goes downhill from the stationary state, the controller in the brake system receives a braking instruction from an entire vehicle controller, and flexibly adjusts a braking force of the vehicle in response to the braking instruction, to control the vehicle speed of the vehicle, so that the vehicle can start stably. This effectively improves traveling safety of the vehicle in a downhill scenario.

According to a fourth aspect, an embodiment of this application provides a control apparatus, including at least one processor. The at least one processor is coupled to at least one memory; and the at least one processor is configured to execute a computer program or instructions stored in the at least one memory, so that the apparatus performs the method according to any one of the first aspect or the possible designs of the first aspect.

According to a fifth aspect, an embodiment of this application provides a computer-readable storage medium. The computer-readable storage medium stores a computer program or instructions, and when a computer reads and executes the computer program or the instructions, the computer is enabled to perform the method according to any one of the first aspect or the possible designs of the first aspect.

For beneficial effect of the fourth aspect and the fifth aspect, refer to technical effect that can be achieved by corresponding designs in the first aspect. Details are not described herein again.

BRIEF DESCRIPTION OF DRAWINGS

FIG. 1 is an example diagram of a structure of a brake system according to an embodiment of this application;

FIG. 2 is an example diagram of a structure of another brake system according to an embodiment of this application;

FIG. 3 is an example schematic flowchart 1 of a control method according to an embodiment of this application;

FIG. 4A is an example diagram 1 of a downhill scenario according to an embodiment of this application;

FIG. 4B is an example diagram 2 of a downhill scenario according to an embodiment of this application;

FIG. 5 is an example schematic flowchart 2 of a control method according to an embodiment of this application;

FIG. 6 is an example diagram of a change of a braking force of a vehicle according to an embodiment of this application;

FIG. 7 is an example diagram of a structure of a control apparatus according to an embodiment this application; and

FIG. 8 is an example diagram of a structure of an electronic device according to an embodiment of this application.

DESCRIPTION OF EMBODIMENTS

It should be noted that the terms "system" and "network" in embodiments of this application may be used interchangeably. "A plurality of" means two or more than two. In addition, "and/or" describes an association between associated objects, and indicates that three relationships may exist. For example, A and/or B may represent the following cases: Only A exists, both A and B exist, and only B exists, where A and B may be singular or plural. "One or more of the following items (pieces)" or a similar expression thereof refers to any combination of these items, including any combination of singular items (pieces) or plural items (pieces). For example, one or more of a, b, or c may indicate a, b, c, a and b, a and c, b and c, or a, b, and c, where a, b, and c may be singular or plural.

In addition, unless otherwise stated, ordinal numbers such as "first" and "second" in embodiments of this application are intended to distinguish between a plurality of objects, but are not intended to limit priorities or importance degrees of the plurality of objects. For example, a first threshold and a second threshold are merely used to distinguish between different thresholds, and do not indicate different priorities, different importance, or the like of the thresholds.

1. Electrical park brake (electrical park brake, EPB) is a key actuator for implementing static park brake by a vehicle on a flat ground and a hill. Usually, two motors are deployed on rims on a rear axle of the vehicle to implement an EPB function of the rear axle.

2. A hill descent control (hill descent control, HDC) function is used to adjust a braking force of a vehicle in a scenario in which the vehicle starts to go downhill from a stationary state. In embodiments of this application, the braking force of the vehicle is adjusted, so that a vehicle speed of the vehicle can be within a target range, to implement stable starting of the vehicle.

3. An adaptive cruise control (adaptive cruise control, ACC) system is a system in which a function of keeping an appropriate distance from a vehicle ahead is added to a vehicle that performs cruise control at a specified vehicle speed, and usually has a fixed-speed cruise function, a follow-up cruise function, a curve cruise function, a driving mode selection function, a smart curve passing function, an intelligent speed limit function, and the like. In addition, a speed of the vehicle may be controlled by using a brake system and a drive system, to implement the foregoing functions. In embodiments of this application, the vehicle enables an ACC function in a normal traveling state.

4. A value added function (value added function, VAF) is a braking function of a brake system. When this function is enabled, the brake system may respond to a control request from an autonomous driving system or an assisted driving system, provide control interfaces such as ABP, AEB, APA, AWB, CDD Stop&Go, and VLC to meet control requirements of the autonomous driving system or the assisted driving system on vehicle driving and braking, provide functions such as AVH, BDW, HAZ, HBA, HDC, HFC, HRB and HSA to ensure comfort and safety of a driver, and is applicable to working conditions such as hill-start, downhill, long-time braking, and braking disc overheating. Embodiments of this application mainly relate to an HDC function of the brake system. To be specific, embodiments of this application are applied to a downhill scenario of a vehicle.

To improve safety of a vehicle traveling on a hill, this application provides a control method and a brake system, to implement stable starting of a vehicle in a scenario in which the vehicle starts to go downhill from a stationary state. In the method, when the vehicle goes downhill from the stationary state, a stroke of a brake pedal in the vehicle is collected, where the stroke of the brake pedal represents a degree of depressing the brake pedal by a driver. When the stroke of the brake pedal is greater than a first threshold, the vehicle is controlled to brake with a first braking force, for a vehicle speed to be within a target vehicle speed range. In this way, the vehicle may be prevented from being accelerated too fast due to a forward surge. This is beneficial to subsequent vehicle speed control, prevents vehicle speed over-adjustment, and reduces a sense of panic of the driver in downhill, thereby effectively improving safety and comfort of the vehicle going downhill.

It may be understood that the control method provided in embodiments of this application is applicable to any one of an electronic hydraulic brake (Electro Hydraulic Brake, EHB) system, an electronic mechanical brake (Electro-Mechanical Brake, EMB) system, or a brake system with a combination of an EHB system and an EMB system. This is not specifically limited in embodiments of this application.

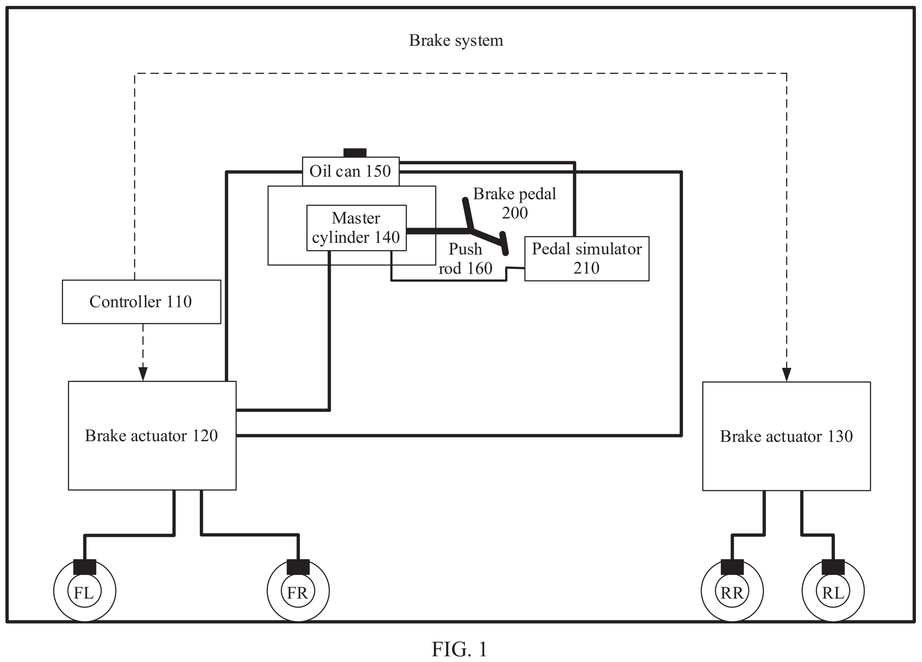

FIG. 1 is a diagram of a structure of a brake system with a combination of an EHB system and an EMB system according to an embodiment of this application. The brake system includes a controller 110, a brake actuator 120, a brake actuator 130, a brake pedal 200, and a pedal stroke sensor (not shown in the figure).

The brake pedal 200 is connected to the pedal stroke sensor, and the pedal stroke sensor may collect a stroke of the brake pedal when a vehicle goes downhill from a stationary state.

The controller 110 is configured to control the brake actuator 120 and the brake actuator 130 to complete a braking operation of the vehicle with a first braking force, for a vehicle speed of the vehicle to be within a target vehicle speed range, so that the vehicle can stably start in a scenario in which the vehicle starts to go downhill from a stationary state. It should be understood that the controller 110 may be an integrated unit of one or more controllers, and the controller 110 may reuse a controller (for example, a vehicle identification unit (Vehicle Identification Unit, VIU) or a vehicle domain controller (Vehicle Domain Control, VDC)) in the vehicle, to further reduce a quantity of components in the brake system, so as to reduce complexity of the brake system and reduce development costs. Alternatively, the controller 110 is disposed independently of a VDC.

The controller 110 may be an integrated circuit chip and has a signal processing capability. For example, the controller 110 may be a general-purpose processor, may be a field programmable gate array (field programmable gate array, FPGA), may be an application-specific integrated chip (application-specific integrated circuit, ASIC), may be a system on chip (system on chip, SoC), may be a network processor (network processor, NP), may be a digital signal processing circuit (digital signal processor, DSP), may be a micro controller (micro controller unit, MCU), may be a programmable logic device (programmable logic device, PLD), or may be another programmable logic device, discrete gate or transistor logic device, discrete hardware component, or another integrated chip. The controller 110 may include an element or a circuit having a processing capability, for example, may include a central processing unit (central processor unit, CPU), a neural-network processing unit (neural-network processing unit, NPU), or a graphics processing unit (graphics processing unit, GPU), for another example, may include an application processor (application processor, AP), a modem processor, an image signal processor (image signal processor, ISP), a video codec, a digital signal processor (digital signal processor, DSP), and/or a baseband processor. This is not specifically limited.

Correspondingly, in a possible implementation, the pedal stroke sensor collects a stroke of the brake pedal when the vehicle goes downhill from the stationary state, and sends the stroke of the brake pedal 200 to the controller 110, where the stroke of the brake pedal represents a degree of depressing the brake pedal by a driver. When the stroke of the brake pedal is greater than a first threshold, the controller 110 controls the brake actuator to complete the braking operation of the vehicle with the first braking force, for the vehicle speed to be within the target vehicle speed range. In another possible implementation, the pedal stroke sensor collects a stroke of the brake pedal when the vehicle goes downhill from the stationary state, and sends the stroke of the brake pedal to the VDC, where the stroke of the brake pedal represents a degree of depressing the brake pedal by a driver. A control unit is configured to receive a braking instruction from the VDC when the stroke of the brake pedal is greater than a first threshold, where the braking instruction is used to control the brake actuator to complete the braking operation of the vehicle with the first braking force, for the vehicle speed to be within the target vehicle speed range.

The brake actuator 120 is connected to front wheels of the vehicle through hydraulic pipes. Therefore, the brake actuator 120 may complete a braking operation on the front wheels of the vehicle under control of the controller. The brake actuator 130 is connected to rear wheels of the vehicle. Therefore, the brake actuator 130 may complete a braking operation on the rear wheels of the vehicle under control of the controller. For example, still refer to FIG. 1. It is assumed that the vehicle has four braked wheels. The front wheels of the vehicle include a left front wheel (left front wheel, LFW) (namely, a wheel corresponding to the FL shown in FIG. 1) and a right front wheel (right front wheel, RFW) (namely, a wheel corresponding to the FR shown in FIG. 1), and the rear wheels of the vehicle include a left rear wheel (left rear wheel, LRW) (namely, a wheel corresponding to the RL shown in FIG. 1) and a right rear wheel (right rear wheel, RRW) (namely, the wheels corresponding to the RR shown in FIG. 1). Correspondingly, the brake actuator 120 may implement braking on the FL wheel and the FR wheel of the vehicle under control of the controller 110, and the brake actuator 130 may implement braking on the RL wheel and the RR wheel of the vehicle under control of the controller 110. The brake actuator 120 may be, for example, a booster in the EHB system, and the brake actuator 130 may be, for example, a motor in the EMB system.

It may be understood that the brake system may further include another component. As shown in FIG. 1, the brake system further includes an oil can 150, a master cylinder 140, a push rod 160, a brake pedal 200, and a pedal simulator 210. The brake pedal 200 is connected to the master cylinder 140 through the push rod 160. One end of the master cylinder 140 is connected to the oil can 150 through a hydraulic pipe, and the other end of the master cylinder 140 is connected to the brake actuator 120 through a hydraulic pipe. One end of the pedal simulator 210 is connected to the oil can 150 through a hydraulic pipe, and the other end of the pedal simulator 210 is connected to the master cylinder 140 through a hydraulic pipe. The brake actuator 120 is further configured to control oil in the master cylinder 140 to flow into the pedal simulator 210. In this way, the oil in the master cylinder 140 can be controlled to smoothly flow into the pedal simulator with depressing of the driver, to maintain a feeling of the driver of depressing the pedal for braking unchanged, and ensure comfort of the driver and consistency of a pedal feeling.

In embodiments of this application, the master cylinder 140 is also referred to as a master hydraulic braking valve. The master cylinder 140 may be disposed independently of the brake actuator 120, to implement flexible control of the oil of the master cylinder, and facilitate maintenance and replacement of a component in the brake system. Alternatively, the master cylinder 140 may be integrated in the brake actuator 120 to further improve system integration. During implementation, the master cylinder 140, the push rod 160, and the brake pedal 200 may be configured to implement the pedal feeling of the driver. For example, generally, the master cylinder 140 is a piston cylinder, and the piston cylinder stores oil flowing from the oil can 150. When the driver depresses the brake pedal 200, a depressing force drives the push rod 160 to push a piston rod in the master cylinder 140 to move, so that the oil in the piston cylinder is pressed into the hydraulic pipe between the master cylinder 140 and the brake actuator 120, and then flows into the brake actuator 120. In this way, the depressing force of the driver on the brake pedal 200 is converted into power of the oil, to maintain the feeling of the driver of depressing the pedal for braking. On the contrary, when the driver retracts the depressing force on the brake pedal 200, the brake pedal 200 drives the push rod 160 to move, to reset the piston rod in the master cylinder 140. In this way, the oil that is previously pressed into the hydraulic pipe between the master cylinder 140 and the brake actuator 120 and the oil that flows into the brake actuator 120 return to the piston cylinder, to maintain a feeling that the driver cancels braking by stopping depressing the pedal.

In embodiments of this application, the pedal simulator 210 may be disposed independently of the brake actuator 120, so that the brake actuator 120 controls the oil that flows into the pedal simulator 210. Alternatively, the pedal simulator 210 may be integrated in the brake actuator 120 to further improve system integration.

In embodiments of this application, the oil can 150 is an apparatus configured to store oil. During braking, after being extracted from the oil can 150, the oil is applied to the FL wheel through the hydraulic pipe between the oil can 150 and the brake actuator 120 and the hydraulic pipe between the brake actuator 120 and the FL wheel, to implement a braking operation on the FL wheel by applying pressure to the FL wheel. When braking is canceled, the oil previously pressed to the FL wheel returns to the oil can 150 through the hydraulic pipe between the FL wheel and the brake actuator 120 and the hydraulic pipe between the brake actuator 120 and the oil can 150, to implement recycling of the oil.

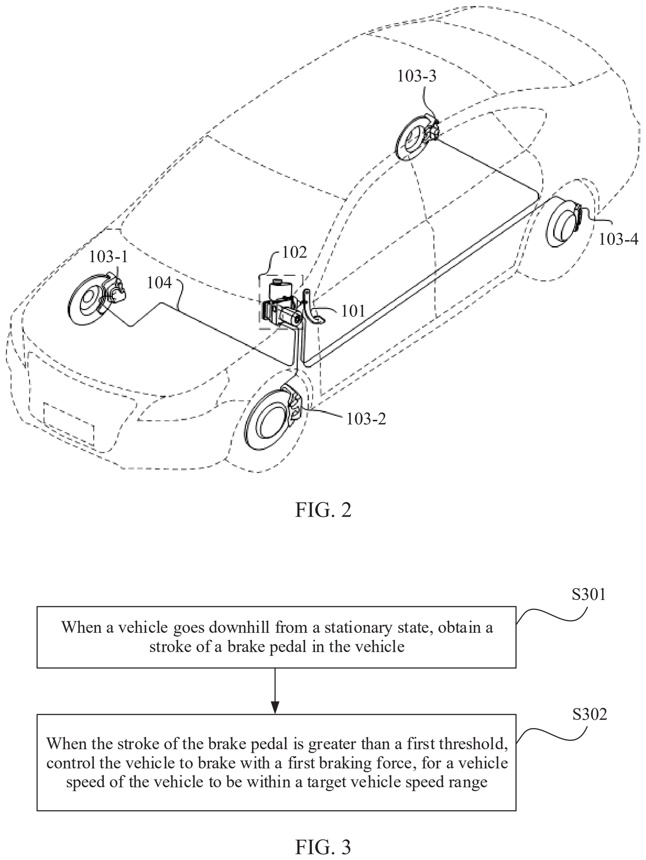

For ease of understanding, FIG. 2 is a diagram of an EHB system according to an embodiment of this application. The brake system includes: a brake pedal 101, an integrated booster 102, brake actuators (103-1, 103-2, 103-3, and 103-4), and a hydraulic pipe 104.

The integrated booster 102 is a core component of the brake system, and is integrated with an electronic control unit (Electronic Control Unit, ECU), a pedal stroke sensor, a brake master cylinder, a motor, a push rod mechanism, and the like. The brake pedal 101 is rigidly connected to the integrated booster 102 through the push rod mechanism, and the integrated booster 102 is connected, through the hydraulic pipes 104, to the brake actuators (103-1, 103-2, 103-3, and 103-4) mounted on wheel sides.

In a scenario in which a vehicle starts to go downhill from a stationary state, when a driver depresses the brake pedal 101, the push rod mechanism in the integrated booster 102 generates displacement (namely, a stroke of the brake pedal 101). Correspondingly, the pedal stroke sensor collects the stroke of the brake pedal 101, and reports the stroke to the ECU. The ECU calculates, based on the stroke, torque that should be generated by the motor, and then a transmission mechanism of the motor converts the torque into a corresponding braking force. The braking force and a push rod force that is generated by the brake pedal 101 through the push rod mechanism act together on the brake master cylinder, and are converted into liquid pressure in the brake master cylinder, and brake fluid with the liquid pressure acts on the brake actuators (103-1, 103-2, 103-3, 103-4) through the hydraulic pipe 104 to implement braking on wheels, to control a speed of the vehicle.

It may be understood that the control method provided in embodiments of this application is applicable to a plurality of forms of brake systems, and the forms are not listed one by one herein. In addition, the brake system provided in this embodiment of this application may be applied to an internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V), and is particularly applicable to an autonomous driving vehicle, an assisted driving vehicle, or the like.

With reference to the specific accompanying drawings, the following describes the control method provided in embodiments of this application.

For example, FIG. 3 is a schematic flowchart of a control method according to an embodiment of this application. The method may be implemented by a VDC in a vehicle, or may be implemented by the controller 110 shown in FIG. 1. The following describes the method by using the controller 110 as an execution body. As shown in FIG. 3, the method includes the following steps.

S301: When the vehicle goes downhill from a stationary state, obtain a stroke of a brake pedal in the vehicle.

The stroke of the brake pedal represents a degree of depressing the brake pedal by a driver.

In a possible implementation, the controller 110 sends a stroke collection instruction to the pedal stroke sensor in the vehicle, so that the pedal stroke sensor may collect the stroke of the brake pedal, and send the stroke of the brake pedal to the controller 110. Correspondingly, the controller 110 receives the stroke of the brake pedal.

In this embodiment of this application, a running status of the vehicle may include the stationary state and a moving state. For example, the controller 110 may estimate a vehicle speed of the vehicle, for example, estimate the vehicle speed of the vehicle based on a wheel speed, and then determine the running status of the vehicle based on the vehicle speed of the vehicle. If the speed of the vehicle is less than or equal to a vehicle speed threshold, the control apparatus determines that the vehicle is in the stationary state. For example, the vehicle speed threshold may be set to 3 km/h. A specific value of the vehicle speed threshold is not limited in embodiments of this application, and may be set based on an actual requirement. If the vehicle speed of the vehicle is greater than the vehicle speed threshold, the control apparatus may determine that the vehicle is in the moving state.

Further, after determining that the vehicle is in the stationary state, the controller may determine whether the vehicle is in a downhill state. In a possible implementation, the controller may obtain a vehicle head orientation and gear information of the vehicle, and determine, based on the vehicle head orientation and the gear information of the vehicle, whether the vehicle is in the downhill state. In this way, whether the vehicle is in the downhill state is determined based on the vehicle head orientation and the gear information of the vehicle. This effectively improves precision of determining the downhill state of the vehicle. Therefore, when the vehicle goes downhill from the stationary state, the vehicle speed of the vehicle can be correspondingly controlled in time, to further improve safety of the vehicle going downhill.

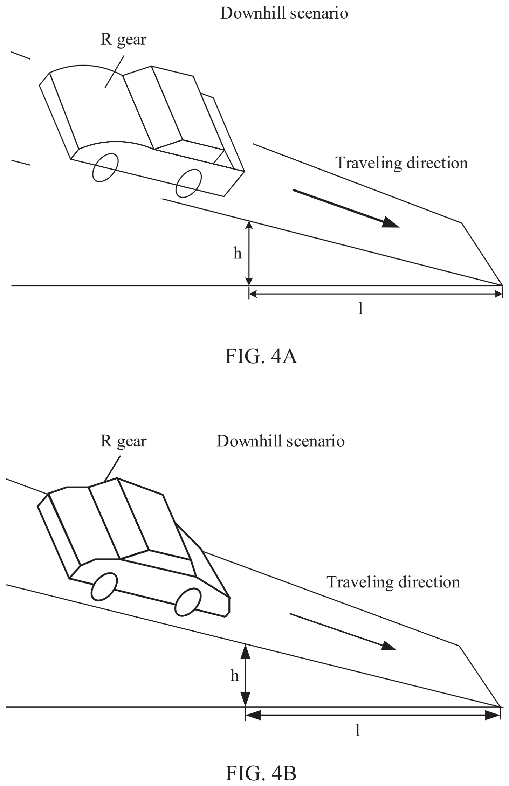

Example 1: Refer. FIG. 4A. In FIG. 4A, when the head of the vehicle faces upward, and a current gear of the vehicle is an R gear, it is determined that the vehicle is in the downhill state.

Example 2: Refer to FIG. 4B. In FIG. 4B, when the head of the vehicle faces downward, and a current gear of the vehicle is a D gear, it is determined that the vehicle is in the downhill state.

S302: When the stroke of the brake pedal is greater than a first threshold, control the vehicle to brake with a first braking force, for the vehicle speed of the vehicle to be within a target vehicle speed range.

In embodiments of this application, "the stroke of the brake pedal is greater than a first threshold" may be understood as that the driver depresses the brake pedal. A value of the first threshold may be, for example, 15 mm to 20 mm. This is not specifically limited in embodiments of this application. The "target vehicle speed range" may be understood as a vehicle speed range of the vehicle starting stably. For example, the target vehicle speed range may be a vehicle speed range less than 20 km/h.

In S302, when the vehicle starts to go downhill from the stationary state, the driver may control the vehicle speed of the vehicle by depressing the brake pedal, to effectively avoid a forward surge of the vehicle, and implement stable starting of the vehicle, so as to effectively improve safety of the vehicle.

To prevent the vehicle from slipping in a downhill scenario, in a possible implementation, when detecting that the stroke of the pedal stroke sensor is zero, the controller controls the vehicle to brake with a second braking force, for the vehicle to remain stationary. "The stroke of the brake pedal is zero" may be understood as that the driver releases the brake pedal. In this way, when the vehicle starts to go downhill from the stationary state, the driver releases the brake pedal, to control the vehicle to brake with the second braking force, for the vehicle to remain stationary. This effectively prevents the vehicle from slipping, and effectively improves traveling safety of the vehicle.

The first braking force may be determined based on the second braking force of the vehicle being stationary and a slope of a hill on which the vehicle is currently located. In other words, the controller 110 may dynamically adjust a braking force of the vehicle based on the slope of the hill on which the vehicle is currently located, so that vehicle speed control of the vehicle is more stable, and traveling safety of the vehicle is further improved. It should be understood that the first braking force is less than or equal to the second braking force, that is, an initial value of the first braking force is a value of the second braking force, and the second braking force gradually decreases in a process of the vehicle going downhill. Optionally, a larger slope of the hill on which the vehicle is currently located indicates a slower decrease of the first braking force. In this way, at a position with a large slope, a vehicle speed of the vehicle is stable, so that the vehicle can be effectively prevented from slipping, and traveling safety of the vehicle is further improved.

In embodiments of this application, a slope of a current position of the vehicle may be, for example, a longitudinal slope or a magnitude of an angle of slope. This is not specifically limited in embodiments of this application. The longitudinal slope of the current position of the vehicle is determined by a ratio of a vertical height of a slope surface at the position of the vehicle to a horizontal distance of the slope surface. For example, an inertia measurement unit (Inertial Measurement Unit, IMU) sensor is mounted on the vehicle, and may be configured to calculate the longitudinal slope. For a specific calculation principle, refer to an example in which the vehicle is in the downhill scenario shown in FIG. 4A. As shown in FIG. 4A, in a process in which the vehicle travels in an uphill road condition, the vertical height of the slope surface at the position of the vehicle is h, and the horizontal distance of the slope surface at the position of the vehicle is l. In this case, the longitudinal slope *slope* may be calculated through the following formula:

$$slope = \frac{h}{l}*100\%$$

In embodiments of this application, a braking control process of the vehicle in the downhill scenario is implemented by using a hill descent control function of the vehicle. Therefore, in a possible implementation, before controlling the vehicle to brake with the first braking force, the controller may further receive a first instruction. The first instruction indicates to enable the hill descent control function of the vehicle, and the hill descent control function is used to adjust the braking force of the vehicle in the downhill scenario. The hill descent control function is enabled in response to the first instruction. It may be understood that the "first instruction" is used to trigger the hill descent control function of the vehicle.

Correspondingly, in a possible implementation, the first instruction is a human-machine interaction instruction, or the first instruction is an instruction from an autonomous driving system or an assisted driving system. The human-machine interaction instruction may be any one of a virtual button instruction, a physical button instruction, a voice instruction, or a text instruction. In this way, a user may flexibly trigger the hill descent control function of the vehicle in different manners. "The first instruction is an instruction from an intelligent driving system or an assisted driving system" may be understood as that the intelligent driving system or the assisted driving system may trigger the hill descent control function of the vehicle, and the user does not need to perform any trigger operation. This effectively improves driving experience of the user.

Example 1: An entire vehicle controller in the vehicle detects any one of a voice instruction "enable the hill descent control function", a voice instruction "downhill", or a voice instruction "downhill braking" that is input by the user, and the entire vehicle controller in the vehicle enables the hill descent control function of the vehicle.

Example 2: When detecting that the vehicle goes downhill from the stationary state, the intelligent driving system or the assisted driving system automatically enables the hill descent control function of the vehicle.

In a possible implementation, when a first condition is met, the controller adjusts the first braking force to zero. The first condition includes at least one of the following: a tail of the vehicle deviates from a current traveling direction of the vehicle, a throttle opening degree of the vehicle is greater than a second threshold, or a caliper in an EPB system of the vehicle is clamped. In this embodiment of this application, the "first condition" may be understood as a suppression condition of the hill descent control function. "A tail of the vehicle deviates from a current traveling direction of the vehicle" means that the vehicle is in a side-slide state. "A throttle opening degree of the vehicle is greater than a second threshold" means that it is detected that the driver depresses the accelerator pedal hard. "A caliper in an EPB system is clamped" means that the vehicle is in the stationary state. A value of the second threshold may be, for example, 1.6. In this way, when the suppression condition of the hill descent control function is met, the braking force of the vehicle is adjusted to zero, so that the vehicle travels normally. This effectively improves traveling safety of the vehicle.

For ease of understanding, the following describes, with reference to a complete example, the control method provided in embodiments of this application.

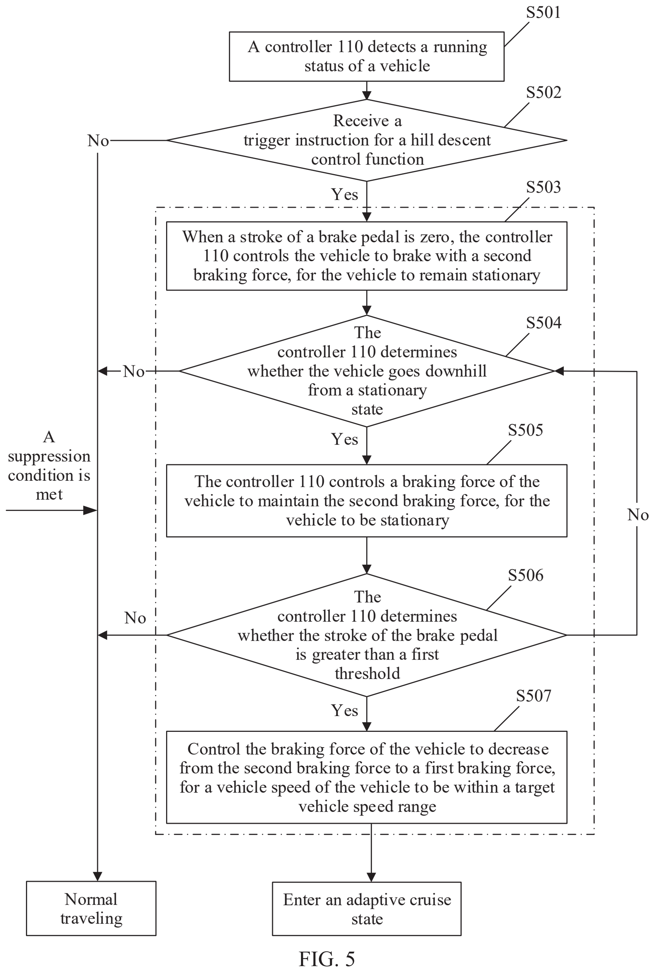

FIG. 5 is another schematic flowchart of the control method according to an embodiment of this application. For example, the method is performed by the brake system shown in FIG. 2. The method includes the following steps.

S501: The controller 110 detects a running status of a vehicle.

In a possible implementation, the controller 110 collects any one of a wheel speed, a vehicle speed, or an acceleration of the vehicle through a vehicle-mounted sensor, to determine whether the vehicle is in a stationary state.

S502: The controller 110 receives a trigger instruction for a hill descent control function.

It should be understood that the trigger instruction is the first instruction described above. Correspondingly, for specific implementation of the trigger instruction, refer to related descriptions of the first instruction. Details are not described herein again.

Specifically, the controller 110 receives the trigger instruction for the hill descent control function, and enables the hill descent control function of the vehicle, so that the controller 110 performs S503 and S504. Otherwise, the controller 110 controls the vehicle to travel normally.

In a possible implementation, when determining that the vehicle goes downhill from the stationary state, the controller 110 may control a vehicle-mounted prompt device to output corresponding prompt information, to prompt the user to input the trigger instruction. The vehicle-mounted prompt device may be, for example, a voice device or a display device. Correspondingly, the prompt information may be voice information, image information, text information, or the like.

Specifically, after the controller 110 enables the hill descent control function of the vehicle, the controller 110 controls a pedal stroke sensor to collect a stroke of a brake pedal. The pedal stroke sensor sends the stroke of the brake pedal to the controller 110, and correspondingly, the controller 110 receives the stroke of the brake pedal.

S503: When the stroke of the brake pedal is zero, the controller 110 controls the vehicle to brake with a second braking force, for the vehicle to remain stationary.

It should be understood that, in S503, when detecting that a driver releases the brake pedal, the controller 110 brakes the vehicle.

S504: The controller 110 determines whether the vehicle goes downhill from the stationary state.

Specifically, when determining that the vehicle goes downhill from the stationary state, the controller 110 performs S505. Otherwise, the controller 110 controls the vehicle to travel normally.

In a possible implementation, the controller 110 may further collect image information around the vehicle through a vehicle-mounted sensor. Correspondingly, the controller 110 may determine, based on the vehicle speed and the image information around the vehicle, whether the vehicle goes downhill from the stationary state.

In another possible implementation, the controller 110 may collect gear information and a vehicle head orientation of the vehicle, determine whether the vehicle is in a downhill state, and determine, in combination of the vehicle speed of the vehicle, whether the vehicle goes downhill from the stationary state.

S505: The controller 110 controls a braking force of the vehicle to maintain the second braking force, for the vehicle to be stationary.

S506: The controller 110 determines whether the stroke of the brake pedal is greater than a first threshold.

Specifically, when the stroke of the brake pedal is greater than the first threshold, the controller 110 performs S506. Otherwise, the controller 110 controls the vehicle to travel normally.

S507: The controller 110 controls the braking force of the vehicle to decrease from the second braking force to a first braking force, for the vehicle speed of the vehicle to be within a target vehicle speed range.

Further, after the vehicle speed of the vehicle falls within the target vehicle speed range, the vehicle enters an adaptive cruise state.

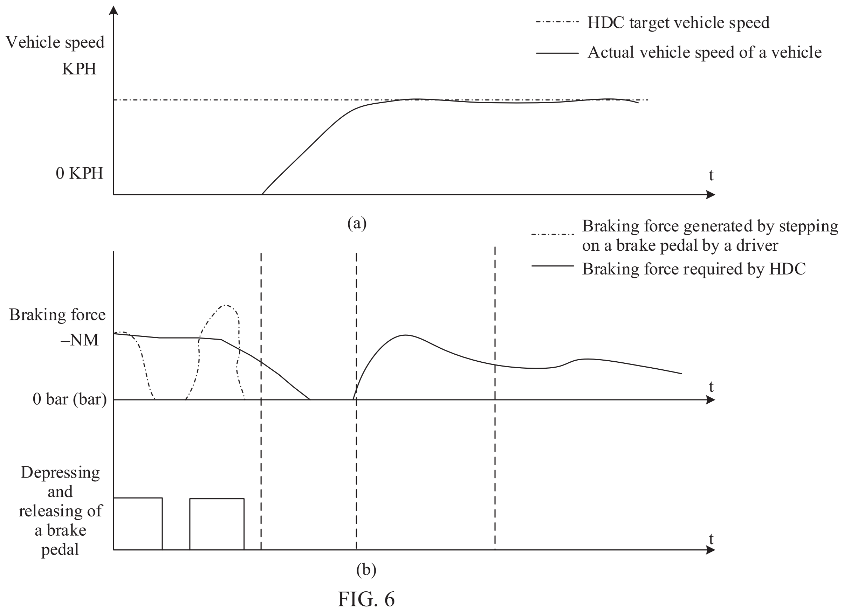

For example, as shown in (a) in FIG. 6, a vehicle speed indicated by a dashed line is an HDC target vehicle speed, and a vehicle speed indicated by a solid line is an actual vehicle speed of the vehicle. As shown in (b) in FIG. 6, a braking force indicated by a dashed line is a braking force generated when the driver depresses the brake pedal, and a braking force indicated by a solid line is a braking force required by HDC. It can be learned from (a) and (b) in FIG. 6 that, when the hill descent control function is enabled, the driver depresses the brake pedal, and the vehicle brakes with the second braking force, so that the vehicle is stationary on a hill. In this case, a corresponding actual vehicle speed is zero. The driver releases the brake pedal, and the braking force is continuously maintained, for the vehicle to be stationary. When the driver depresses the brake pedal again, and the stroke of the brake pedal is greater than the first threshold, after the driver quickly releases the brake pedal, the second braking force gradually decreases to the first braking force (namely, the braking force required by the HDC), so that the actual vehicle speed gradually approaches the HDC target vehicle speed. When the actual vehicle speed reaches the HDC target vehicle speed, the vehicle enters a stable cruise control state.

In addition, in FIG. 5, when the suppression condition of the hill descent control function is met, the controller 110 adjusts the braking force of the vehicle to zero, so that the vehicle travels normally. It should be understood that the suppression condition is the first condition described above. For details, refer to the foregoing related descriptions. Details are not described herein again.

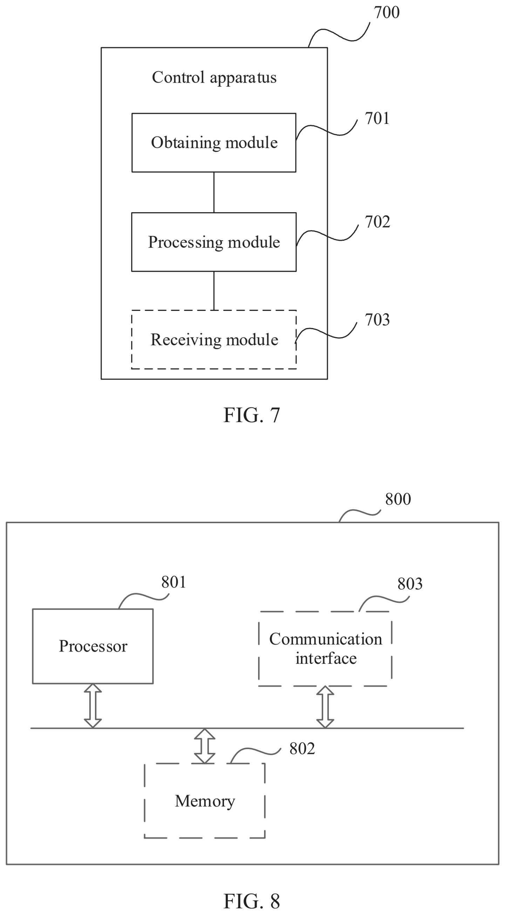

Based on a same technical concept as the foregoing embodiments, an embodiment of this application further provides a control apparatus. The control apparatus may be configured to implement the foregoing method embodiment, and therefore can implement beneficial effect of the foregoing method embodiment. Refer to FIG. 7. A control apparatus 700 may include:

an obtaining module 701, configured to: when a vehicle goes downhill from a stationary state, obtain a stroke of a brake pedal in the vehicle; and

a processing module 702, configured to: when the stroke of the brake pedal is greater than a first threshold, control the vehicle to brake with a first braking force, for a vehicle speed of the vehicle to be within a target vehicle speed range.

In a possible implementation, the first braking force may be determined based on a second braking force of the vehicle being stationary and a slope of a hill on which the vehicle is currently located. Optionally, a larger slope of the hill on which the vehicle is currently located indicates a slower decrease of the first braking force.

In a possible implementation, the method further includes: when the stroke of the brake pedal is zero, controlling the vehicle to brake with the second braking force, for the vehicle to remain stationary.

In a possible implementation, the control apparatus 700 further includes a receiving module 703. The receiving module 703 is configured to receive a first instruction before the vehicle is controlled to brake with the first braking force. The first instruction indicates to enable a hill descent control function of the vehicle, and the hill descent control function is used to adjust a braking force of the vehicle in a downhill scenario of the vehicle. The processing module 702 enables the hill descent control function in response to the first instruction.

In a possible implementation, the first instruction is a human-machine interaction instruction, or the first instruction is an instruction from an autonomous driving system or an assisted driving system.

In a possible implementation, when a first condition is met, the processing module 702 adjusts the first braking force to zero. The first condition includes at least one of the following: a tail of the vehicle deviates from a current traveling direction of the vehicle, a throttle opening degree of the vehicle is greater than a second threshold, or a caliper in an electrical park brake (EPB) system of the vehicle is clamped.

In a possible implementation, the obtaining module 701 may further obtain a vehicle head orientation and gear information of the vehicle, and the processing module 702 determines, based on the vehicle head orientation and the gear information of the vehicle, whether the vehicle is in a downhill state.

Based on a same technical concept, an embodiment of this application further provides an electronic device 800, configured to perform the method in the foregoing embodiment. As shown in FIG. 8, the electronic device 800 may include a processor 801, configured to execute a program or instructions stored in a memory 802. When the program or the instructions stored in the memory 802 are executed, the processor is configured to perform the method in the foregoing embodiment.

Optionally, the electronic device 800 may further include a communication interface 803. FIG. 8 shows, with dashed lines, that the communication interface 803 is optional for the electronic device 800.

A quantity of processors 801, a quantity of memories 802, and a quantity of communication interfaces 803 do not constitute limitations on embodiments of this application, and during specific implementation, may be randomly configured based on a service requirement.

Optionally, the memory 802 is located outside the electronic device 800.

Optionally, the electronic device 800 includes the memory 802. The memory 802 is connected to the at least one processor 801, and the memory 802 stores the instructions that can be executed by the at least one processor 801. FIG. 8 shows, with dashed lines, that the memory 802 is optional for the electronic device 800.

The processor 801 and the memory 802 may be coupled by using an interface circuit, or may be integrated. This is not limited herein.

A specific connection medium among the processor 801, the memory 802, and the communication interface 803 is not limited in this embodiment of this application. In this embodiment of this application, the processor 801, the memory 802, and the communication interface 803 are connected through a bus 804 in FIG. 8. The bus is indicated by a bold line in FIG. 8. A connection manner between other components is merely an example for description, and imposes no limitation. The bus may be classified into an address bus, a data bus, a control bus, and the like. For ease of representation, only one thick line is for indicating the bus in FIG. 8, but this does not mean that there is only one bus or only one type of bus.

It should be understood that the processor mentioned in embodiments of this application may be implemented by using hardware or by software. When the processor is implemented by using hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should be noted that the memory described in this specification aims to include but is not limited to these memories and any memory of another proper type.

The foregoing embodiments may be combined with each other to achieve different technical effect.

According to the foregoing embodiment, an embodiment of this application further provides a computer-readable storage medium. The computer-readable storage medium stores a computer program, and when the computer program is executed by a computer, the computer is enabled to perform any control method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

According to the foregoing embodiment, an embodiment of this application further provides a chip. The chip is configured to read a computer program stored in a memory, to implement any control method provided in the foregoing embodiments.

Based on the foregoing embodiments, an embodiment of this application provides a chip system. The chip system includes a processor, configured to support a computer apparatus in implementing a function of any node in the foregoing embodiments. In a possible design, the chip system further includes a memory, and the memory is configured to store a program and data that are necessary for the computer apparatus. The chip system may include a chip, or may include a chip and another discrete component.

Based on the foregoing embodiments, an embodiment of this application further provides a brake system, including a controller, a brake pedal, a pedal stroke sensor, and a brake actuator. The brake pedal is connected to the pedal stroke sensor, and the control unit is connected to both the pedal stroke sensor and the brake actuator. The pedal stroke sensor is configured to collect a stroke of the brake pedal when the vehicle goes downhill from a stationary state, where the stroke of the brake pedal indicates a degree of depressing the brake pedal by a driver. The control unit is configured to: when the stroke of the brake pedal is greater than a first threshold, control the brake actuator to complete a braking operation of the vehicle with a first braking force, for a vehicle speed of the vehicle to be within a target vehicle speed range.

Based on the foregoing embodiments, an embodiment of this application further provides another brake system, including a controller, a brake pedal, a pedal stroke sensor, and a brake actuator. The brake pedal is connected to the pedal stroke sensor, and the control unit is connected to both the pedal stroke sensor and the brake actuator. The pedal stroke sensor is configured to: when the vehicle goes downhill from a stationary state, collect a stroke of the brake pedal, and send the stroke of the brake pedal to the vehicle controller, where the stroke of the brake pedal indicates a degree of depressing the brake pedal by a driver. The control unit is configured to: when the stroke of the brake pedal is greater than a first threshold, receive a braking instruction from the vehicle controller, where the braking instruction is used to control the brake actuator to complete a braking operation of the vehicle with a first braking force, for a vehicle speed of the vehicle to be within a target vehicle speed range.

For a specific implementation procedure and detailed descriptions, refer to the related procedure in the foregoing embodiment. Details are not described herein again.

According to the solutions provided in embodiments of this application, this application further provides a computer program product. The computer program product includes computer program code. When the computer program code is run on a computer, the computer is enabled to perform the control method.

According to the solutions provided in embodiments of this application, this application further provides a computer-readable storage medium. The computer-readable medium stores program code. When the program code is run on a computer, the computer is enabled to perform the control method.

According to the solutions provided in embodiments of this application, this application further provides a terminal device, including the brake system shown in the foregoing embodiments.

For example, the terminal device may be a smart home device (including but not limited to a television, a robot vacuum, a smart desk lamp, a sound system, a smart lighting system, an electrical appliance control system, home background music, a home theater system, an intercom system, video surveillance, and the like), a smart transportation device (including but not limited to a vehicle, a ship, an unmanned aerial vehicle, a train, a truck, a lorry, and the like), a smart manufacturing device (including but not limited to a robot, an industrial device, smart logistics, a smart factory, and the like), a computer device (including but not limited to a desktop, a personal computer, a server, and the like), a portable electronic device (including but not limited to a mobile phone, a tablet, a palmtop computer, a headset, a speaker, a wearable device (for example, a smart watch), a vehicle-mounted device, a virtual reality device, an augmented reality device, and the like).

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A control method, wherein the method comprises:

   when a vehicle goes downhill from a stationary state, obtaining a stroke of a brake pedal in the vehicle, wherein the stroke of the brake pedal represents a degree of depressing the brake pedal by a driver; and
   when the stroke of the brake pedal is greater than a first threshold, controlling the vehicle to brake with a first braking force, for a vehicle speed of the vehicle to be within a target vehicle speed range.

2. The method according to claim 1, wherein the first braking force is determined based on a second braking force of the vehicle being stationary and a slope of a hill on which the vehicle is currently located.

3. The method according to claim 2, wherein a larger slope of the hill on which the vehicle is currently located indicates a slower decrease of the first braking force.

4. The method according to claim 2 or 3, wherein the method further comprises:
when the stroke of the brake pedal is zero, controlling the vehicle to brake with the second braking force, for the vehicle to remain stationary.

5. The method according to any one of claims 1 to 4, wherein before the controlling the vehicle to brake with a first braking force, the method further comprises:

receiving a first instruction, wherein the first instruction indicates to enable a hill descent control function of the vehicle, and the hill descent control function is used to adjust a braking force of the vehicle in a downhill scenario of the vehicle; and
enabling the hill descent control function in response to the first instruction.

6. The method according to claim 5, wherein the first instruction is a human-machine interaction instruction, or the first instruction is an instruction from an autonomous driving system or an assisted driving system.

7. The method according to any one of claims 1 to 6, wherein the method further comprises:

when a first condition is met, adjusting the first braking force to zero, wherein
the first condition comprises at least one of the following: a tail of the vehicle deviates from a current traveling direction of the vehicle, a throttle opening degree of the vehicle is greater than a second threshold, or a caliper in an electrical park brake EPB system of the vehicle is clamped.

8. A brake system, comprising a control unit, a brake pedal, a pedal stroke sensor, and a brake actuator, wherein the brake pedal is connected to the pedal stroke sensor, and the control unit is connected to both the pedal stroke sensor and the brake actuator;

the pedal stroke sensor is configured to: when a vehicle goes downhill from a stationary state, obtain a stroke of the brake pedal, wherein the stroke of the brake pedal represents a degree of depressing the brake pedal by a driver; and
the control unit is configured to: when the stroke of the brake pedal is greater than a first threshold, control the brake actuator to complete a braking operation of the vehicle with a first braking force, for a vehicle speed of the vehicle to be within a target vehicle speed range.

9. A control apparatus, comprising at least one processor, wherein the at least one processor is coupled to a memory, the memory stores program instructions, and the at least one processor is configured to execute the program instructions to implement the method according to any one of claims 1 to 7.

10. A terminal device, comprising wheels and the brake system according to claim 8.

11. A computer-readable storage medium, wherein the computer-readable storage medium stores a computer program or instructions, and when a computer reads and executes the computer program or the instructions, the computer is enabled to perform the method according to any one of claims 1 to 7.

FIG. 1

EP 4 653 270 A1

FIG. 2

When a vehicle goes downhill from a stationary state, obtain a stroke of a brake pedal in the vehicle

S301

When the stroke of the brake pedal is greater than a first threshold, control the vehicle to brake with a first braking force, for a vehicle speed of the vehicle to be within a target vehicle speed range

S302

FIG. 3

FIG. 4A

FIG. 4B

S501

A controller 110 detects a running status of a vehicle

S502

Receive a trigger instruction for a hill descent control function

No

Yes

S503

When a stroke of a brake pedal is zero, the controller 110 controls the vehicle to brake with a second braking force, for the vehicle to remain stationary

S504

The controller 110 determines whether the vehicle goes downhill from a stationary state

No

Yes

S505

The controller 110 controls a braking force of the vehicle to maintain the second braking force, for the vehicle to be stationary

A suppression condition is met

S506

The controller 110 determines whether the stroke of the brake pedal is greater than a first threshold

No

No

Yes

S507

Control the braking force of the vehicle to decrease from the second braking force to a first braking force, for a vehicle speed of the vehicle to be within a target vehicle speed range

Normal traveling

Enter an adaptive cruise state

FIG. 5

(a)

(b)

FIG. 6

Vehicle speed
KPH

HDC target vehicle speed

Actual vehicle speed of a vehicle

0 KPH

t

Braking force generated by stepping on a brake pedal by a driver

Braking force required by HDC

Braking force
−NM

0 bar (bar)

Depressing and releasing of a brake pedal

t

t

700

Control apparatus

Obtaining module

701

Processing module

702

Receiving module

703

FIG. 7

800

801

Processor

803

Communication interface

802

Memory

FIG. 8

## INTERNATIONAL SEARCH REPORT

| | International application No. |
|---|---|
| | **PCT/CN2023/076733** |

### A. CLASSIFICATION OF SUBJECT MATTER

B60T8/24(2006.01)i; B60T8/17(2006.01)i; B60T7/12(2006.01)i; B60W40/076(2012.01)i

According to International Patent Classification (IPC) or to both national classification and IPC

### B. FIELDS SEARCHED

Minimum documentation searched (classification system followed by classification symbols)

IPC: B60T, B60W, B60L

Documentation searched other than minimum documentation to the extent that such documents are included in the fields searched

Electronic data base consulted during the international search (name of data base and, where practicable, search terms used)

CNABS, CNTXT, ENTXTC, VEN, CNKI: 坡, 起步, 制动, 踏板, 阈值, 限值, 车速, 速度, 陡坡缓降, 坡道辅助; slope, brak+, pedal, threshold, speed, HDC

### C. DOCUMENTS CONSIDERED TO BE RELEVANT

| Category* | Citation of document, with indication, where appropriate, of the relevant passages | Relevant to claim No. |
|---|---|---|
| Y | DE 102007030254 A1 (CONTINENTAL TEVES AG & CO. OHG) 17 January 2008 (2008-01-17) <br> description, paragraphs 0049-0069, and figures 1-4 | 1-11 |
| Y | JP 2008239034 A (HINO MOTORS, LTD.) 09 October 2008 (2008-10-09) <br> description, paragraphs 0011-0037, and figures 1-5 | 1-11 |
| A | CN 106394254 A (WEICHAI POWER CO., LTD.) 15 February 2017 (2017-02-15) <br> entire document | 1-11 |
| A | CN 109760519 A (JIANGXI JIANGLING GROUP ELECTRIC VEHICLE CO., LTD.) 17 May 2019 (2019-05-17) <br> entire document | 1-11 |
| A | CN 115139998 A (DONGFENG MOTOR GROUP CO., LTD.) 04 October 2022 (2022-10-04) <br> entire document | 1-11 |
| A | DE 10049138 A1 (CONTINENTAL TEVES AG & CO. OHG) 23 May 2001 (2001-05-23) <br> entire document | 1-11 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 September 2023** | **08 October 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/076733** |

| C. | DOCUMENTS CONSIDERED TO BE RELEVANT | |
|---|---|---|
| Category* | Citation of document, with indication, where appropriate, of the relevant passages | Relevant to claim No. |
| A | WO 0114186 A1 (CONTINENTAL TEVES AG & CO. OHG et al.) 01 March 2001 (2001-03-01)<br>      entire document | 1-11 |

## INTERNATIONAL SEARCH REPORT
### Information on patent family members

International application No.

**PCT/CN2023/076733**

| Patent document cited in search report | | | Publication date (day/month/year) | Patent family member(s) | | | Publication date (day/month/year) |
|---|---|---|---|---|---|---|---|
| DE | 102007030254 | A1 | 17 January 2008 | None | | | |
| JP | 2008239034 | A | 09 October 2008 | None | | | |
| CN | 106394254 | A | 15 February 2017 | None | | | |
| CN | 109760519 | A | 17 May 2019 | None | | | |
| CN | 115139998 | A | 04 October 2022 | None | | | |
| DE | 10049138 | A1 | 23 May 2001 | WO | 0126944 | A1 | 19 April 2001 |
| WO | 0114186 | A1 | 01 March 2001 | EP | 1212222 | A1 | 12 June 2002 |
| | | | | DE | 50015874 | D1 | 08 April 2010 |

Form PCT/ISA/210 (patent family annex) (July 2022)